(19) Europäisches Patentamt / European Patent Office / Office européen des brevets

(11) **EP 3 239 486 B1**

(12) **EUROPEAN PATENT SPECIFICATION**

(45) Date of publication and mention of the grant of the patent:
**03.01.2024 Bulletin 2024/01**

(21) Application number: **17163452.0**

(22) Date of filing: **28.03.2017**

(51) International Patent Classification (IPC):
 *F01P 7/16* (2006.01)   *F02D 41/26* (2006.01)

(52) Cooperative Patent Classification (CPC):
 **F02D 41/26; F01P 7/167; F02D 35/025; F02D 41/1401;** F01P 2025/40; F01P 2025/42; F01P 2025/44; F01P 2025/46; F02D 2041/1412; F02D 2041/1433; F02D 2200/021; F02D 2200/0406; F02D 2200/0414

(54) **A CONDITION-BASED POWERTRAIN CONTROL SYSTEM**

ZUSTANDSABHÄNGIGES ANTRIEBSSTEUERUNGSSYSTEM

SYSTÈME DE COMMANDE DE GROUPE MOTOPROPULSEUR BASÉ SUR DES CONDITIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2016 US 201615139035**

(43) Date of publication of application:
**01.11.2017 Bulletin 2017/44**

(73) Proprietor: **Garrett Transportation I Inc.
Torrance, CA 90504 (US)**

(72) Inventors:
 • **FUXMAN, Adrian Matias
  Morris Plains, NJ 07950 (US)**
 • **PACHNER, Daniel
  Morris Plains, NJ 07950 (US)**

(74) Representative: **Lucas, Peter Lawrence et al
LKGlobal UK Ltd.
Cambridge House, Henry Street
Bath BA1 1BT (GB)**

(56) References cited:
 WO-A1-03/102394    US-A1- 2006 185 626
 US-A1- 2007 261 648

**Description**

Background

The present disclosure pertains to powertrain systems, and particularly to a control of engines and cooling systems. More particularly, the disclosure pertains to performance improvement of engines and cooling systems.

Summary

The present invention is defined by the appended claims.

The disclosure reveals a system and approach for development of set points and set point trajectories for a controller of a powertrain system. A controller of the powertrain system may be configured to determine set points and/or set point trajectories for one or more conditions of the powertrain system. The controller may determine set points and/or set point trajectories for the one or more conditions of the powertrain system based, at least in part, on current operating conditions of the powertrain system and performance cost function. The controller may determine positions of actuators of the powertrain system to drive the conditions of the powertrain system to the determined set points and/or set point trajectories. The present system and approach may configure and update set points and set point trajectories for conditions of a powertrain system in real time and while the powertrain system is operating.

The approach described in this disclosure may be important for controlling transient performance of powertrain systems and/or be important for other purposes. This may be so because a standard approach for controlling performance of powertrain systems may consist of computing static offline set points as a function of disturbance variables, and for transient performance optimization, such an approach may require maps having large dimensions that may exceed memory available in the engine control unit and/or processing power thereof that may be present in an online environment.

However, the disclosed system and approach may determine set points and/or set point trajectories online and in real time with less memory and processing power requirements than conventional approaches. A powertrain system according to the state of art is shown in the document US 2007/261648 A1.

Brief Description of the Drawing

Figure 1 is a schematic block diagram of an illustrative powertrain system;
Figure 2 is a schematic block diagram of a controller of the illustration powertrain system;
Figure 3 is a schematic diagram of an implementation of an illustrative powertrain condition management system;
Figure 4 is a schematic diagram of an implementation of an illustrative powertrain condition management system; and
Figure 5 is a schematic flow diagram of an illustrative approach for managing a condition of a powertrain system.

Description

The present system and approach, as described herein and/or shown in the Figures, may incorporate one or more processors, computers, controllers, user interfaces, wireless and/or wire connections, and/or the like, wherever desired.

Transportation original equipment manufacturers (OEMs) may spend a large amount of time and money on a labor intensive process of designing setpoints for their powertrain controllers. A powertrain may incorporate an engine, a cooling system, and, in some instances, an exhaust gas aftertreatment mechanism. The powertrain may also incorporate a drivetrain and, in some setups, a vehicle associated with the drivetrain. Any reference to an engine, cooling system, powertrain or aftertreatment system herein, may be regarded as a reference to any other or all of these components.

One version of the present approach may leverage a powertrain controller to assist in the development of set points and/or set point trajectories for conditions of the powertrain system. The powertrain controller may be parametrized as a function of the set point trajectories to set actuator positions in real time (e.g., while the powertrain system is operating). Another version of the present approach may be a practical way for providing a user with information about how best to modify setpoints for a powertrain controller on-line and in real time.

A characteristic of powertrain condition management systems (e.g., a powertrain thermal management system or other powertrain system) may be that operating conditions (e.g., speed, load, and so forth) may change continuously or off and on while the powertrain is operating to meet the needs of an operator of the powertrain. In an example of powertrain thermal management systems, optimal temperatures (e.g., temperature set point trajectories of components of a powertrain system) for minimum fuel consumption and/or actuator power consumption may depend on current operating conditions of the powertrain system. One approach may control temperature set point trajectories of components of the powertrain system such that the temperatures may be driven to optimal values (e.g., set point trajectories) for a given economic cost function of operating the powertrain (e.g., to minimize fuel costs, energy consumption, and so on). In some cases, the economic cost function may take into consideration performance variables such as fuel consumption, energy consumption, parasitic losses, exhaust output, and so forth, when changes in operating conditions of the powertrain are measured or future changes to the operating condition may be available. Although the powertrain thermal management systems disclosed herein may be discussed primarily with respect to setting temperature set point trajectories, the disclosed concepts may be utilized with pressure set point trajectories (e.g., air-conditioning refrigerant), flow set point trajectories (e.g., coolant flow), and/or other condition set point trajectories of powertrain systems.

In some cases, set point trajectories for conditions of the powertrain may be maintained within one or more constraints. In one example, an economic cost function applied to the control of a powertrain system may be part of a model-predictive control (MPC) framework such that a control action may be generated while maintaining one or more conditions (e.g., a temperature condition, actuator positions, and so forth) within one or more constraints.

Although control strategies for set point trajectory regulation with set point trajectories from steady state optimization (e.g., off-line optimization) may be used; such control strategies may not provide optimal performance of the powertrain system because the set point trajectories may be set without taking into consideration current operating conditions of the powertrain system. In some cases, thermal management of a powertrain system may be investigated from a system modeling and/or optimization perspective, where the optimization of the powertrain system performance occurs online (e.g., in real time during operation of an engine or other component of the powertrain system).

Herein, one may discuss approaches and/or systems for optimization (e.g., on-line optimization) of powertrain thermal management in a model-based control framework. As discussed further below, the disclosed concepts may be implemented in one or more of two or more approaches which each address on-line optimization and control of powertrain thermal management.

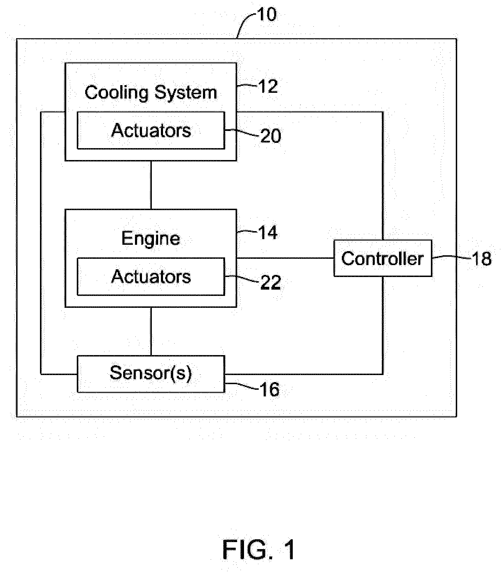

Turning to the figures, Figure 1 depicts a powertrain system 10. The powertrain system 10 may include a cooling system 12, an engine 14, sensors 16, a controller 18, and/or one or more other components.

The cooling system 12 may be connected to the engine 14. Illustratively, the cooling system 12 may be configured to manage temperature values of powertrain components, including the engine 14.

One or more sensors 16 of the powertrain system 10 may be configured to sense one or more variables of the cooling system 12 and/or the engine 14. In some cases, the sensors 16 may be in communication with the controller 18 and configured to send sensed variable values to the controller 18.

The sensors 16 may be any type of sensor configured to sense a variable of the powertrain system. For example, the sensors 16 may include, but are not limited to, a temperature sensor, an absolute pressure sensor, a gage pressure sensor, a differential pressure sensor, a flow sensor, a position sensor, and/or one or more other types of sensors.

The controller 18 may be an electronic control module (ECM) or electronic control unit (ECU) with a control system algorithm therein. In one example, the control system algorithm may configure the controller 18 to be a multivariable controller.

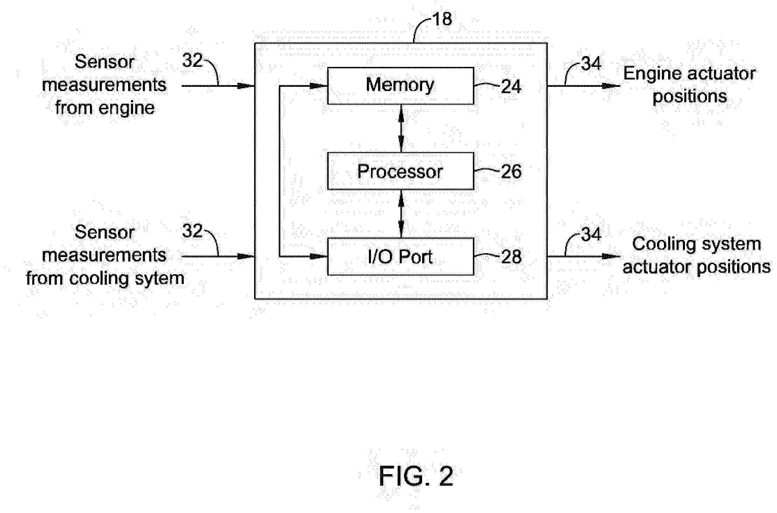

As seen in Figure 2, the controller 18 may include one or more controller components having memory 24, a processor 26, an input/output (I/O) port 28, and/or one or more other components. The processor 26 may be in communication with the memory 24 and may be configured to execute executable instructions stored on the memory 24 and/or store and use data saved on the memory 24. In one example, the memory 24 may include one or more control system algorithms and/or other algorithms and the processor 26 may execute instructions (e.g., software code or other instructions) related to the algorithms in the memory 24.

The memory 24 may be any type of memory and/or may include any combination of types of memory. For example, the memory may be volatile memory, non-volatile memory, random access memory (RAM), FLASH, read-only memory (ROM), and/or one or more other types of memory.

The I/O port 28 may send and/or receive information and/or control signals to and/or from the cooling system 12, engine 14, one or more sensors 16, actuators, 20, 22, and/or other components of the power system 10 or components interacting with the power system 10. The I/O port 28 may be configured to communicate over a wired or wireless connection with other communicative components. Example wireless connections may include, but are not limited to, near-field communication (NFC), Wi-Fi, local area networks (LAN), wide area networks (WAN), Bluetooth0, Bluetooth® Low Energy (BLE), ZIGBEE, and/or one or more other non-proprietary or proprietary wireless connection.

In some cases, the controller 18 may be configured to control positions of actuators of the powertrain system 10 by outputting control signals 34 (e.g., control signals for setting actuator positions), as shown in Figure 2, from the I/O port 28 or other port to drive conditions of powertrain system 10 components to an associated set point trajectory. The outputted control signals 34 may be based, at least in part on received values for one or more variables (e.g., sensor measurements 32 from components of the powertrain system 10 and/or other operating conditions, including actuator positions, of the powertrain system 10).

In one example controller 18, the controller 18 may be configured to control positions of actuators 20 of the cooling system 12, actuators 22 of the engine 14, and/or actuators of other components of the powertrain system 10 based at least in part, on receive values (e.g., from sensor measurements 32) of one or more variables. Example powertrain system 10 actuators include, but are not limited to, actuators of grill shutters, three-way valves, radiator fans, an engine pump, a turbocharger waste gage (WG), a variable geometry turbocharger (VGT), an exhaust gas recirculation (EGR) system, a start of injection (SOI) system, a throttle valve (TV), and so on. In some cases, sensors 16 may be configured to sense positions of the actuators.

As discussed and seen in Figure 2, the controller 18 may be configured to receive values for one or more variables sensed by the sensors 16. Variables sensed by the sensors 16 may include one or more of engine in-cylinder wall temperature (e.g., temperature of a metal or other material of an engine), $T_{metal}$, intake air temperature, $T_{intake\ air}$, engine oil temperature, $T_{engine\ oil}$, three-way valve position, grill shutter position, radiator fan position, engine pump position, engine speed, engine load, vehicle speed, and/or one or more other variables related to operation of the powertrain system 10.

The values of sensed variables (e.g., of sensor measurement signals 32) received at the controller 18 from the one or more sensors 16 may be indicative of one or more conditions of the cooling system 12 and/or the engine 14. The received variable values may be a condition of the cooling system 12 and/or the engine 14 or may be used in calculating or determining a condition of the cooling system 12 and/or the engine 14. Illustrative conditions of the cooling system 12 and/or the engine 14 may include temperature conditions, pressure conditions, flow conditions, and/or one or more other conditions.

The controller 18 may be configured to set and/or propose set point trajectories for conditions of the cooling system 12 and/or the engine 14. Once set point trajectories for conditions of the cooling system 12 and/or the engine 14 are determined, the controller 18 may be configured to adjust one or more positions of the actuators 20 of the cooling system 12 and/or actuators 22 of the engine 14 to drive a value of the one or more conditions to associated condition set point trajectories. Determining the set point trajectories and/or adjusting the actuators may be performed while the controller is on-line (e.g., the cooling system 12 and/or the engine 14 are operating (e.g., during steady state and/or transient operation of the powertrain system 10) and the controller may be receiving inputs from sensors 16) and/or other inputs in real-time.

Set point trajectories may be determined by the controller 18 while taking into consideration current operating conditions of the powertrain system. When considering current operating conditions (e.g., steady state and/or transient operating conditions) of the powertrain system 10, a controller 18 may be configured to determine set point trajectories for one or more conditions of a powertrain system 10 (e.g., conditions of a cooling system 12, engine 14, and/or other components of the powertrain system) based, at least in part, on a cost function that may optimize a set of performance variables of the cooling system 12 and/or the engine 14. Illustrative optimization of performance variables may include, but are not limited to, minimizing fuel consumption, energy consumption, minimizing parasitic losses, and so forth. In one example use of a cost function, a controller 18 may utilize a cost function configured to determine set point trajectories for one or more thermal conditions (e.g., oil temperature, engine temperature, speed of a variable speed cooling pump, and so forth) to minimize fuel consumption.

A cost function utilized by the controller 18 may take into consideration a model of the powertrain system 10, where the model may be represented by:

$$\text{Cooling System/Engine Output: } x\_dot = F(x,u,w), \text{ Outputs: } y = H(x,u,\ w) \quad (1)$$

"x" may represent variables for which on-engine sensor measurements may be taken (e.g., states of variables such as pressure, temperature, concentrations, turbo speed, and so on). "u" may represent manipulated variables or inputs (e.g., signals from the controller 18 to operate actuators such as a 3-way valve, grill shutters, radiator fans, an engine pump, and so forth). "w" may represent exogenous inputs such as speed, fuel, ambient conditions, and so forth. These inputs may be measured. However, some outputs of the powertrain system 10 such as performance and quality variables may not necessarily be measured, but may be inferred, approximated by modeling, estimated by trials, calculated with algorithms, and other ways.

When considering a model of the cooling system 12 and/or the engine 14, such as equation (1), a non-linear cost function, for example, may take the following form:

$$\min_{u} J = f(y(u,w),w) \qquad (2)$$

where $f(y,u)$ may represent variables of the cooling system 12 and the engine 14 that may have an impact on fuel economy (e.g., fuel consumption, energy consumption, parasitic losses, and so on) of the powertrain system 10. A mechanism for computing the actuator positions, u, in real-time such that it may optimize the cost function, J, may occur on a controller that may compute optimal set point trajectories for low-level controllers as follows:

$$\min_{\{y\_SP_1,...,y\_SP_{N_p}\}} J = \sum_{k=1}^{N_p} \left( f(y_k, w_k) + \|y\_SP_k - y\_SP_{k-1}\|_2^{R_\Delta} + \|\varepsilon\|_2^G \right)$$

Subject to:

$$y_k = G(x_k, y\_SP_k, w_k)$$
$$y_{min} - \varepsilon \le y_k \le y_{max} + \varepsilon$$

$$(3)$$

where $\|y\_SP_k - y\_SP_{k-1}\|_2^{R_\Delta}$ may represent tuning of the controller 18, $\|\varepsilon\|_2^G$ may represent soft constraints on the model, and $yk = G(x_k, y\_SP_k, w_k)$ and $y_{min} - \varepsilon \le y_k \le y_{max} + \varepsilon_v$ may represent that the model is a closed-loop model. Here, k is a time index and $y\_SP_k$ are the optimal set point trajectories computed by the controller.

At least in part because the model of the powertrain system 10 may be configured to output set point trajectories for the conditions of cooling system 12 and/or the engine 14, the cost function may determine set point trajectories for conditions of the cooling system 12 and/or the engine 14 in view of inputs from sensors 16 and/or other inputs, while minimizing costs and maintaining the set point trajectories and positions of actuators represented in the powertrain system model (e.g., equation (1)) within predetermined constraints. In one example, the controller 18 may be configured to determine thermal set point trajectories for the temperature of an engine housing, temperature of air in an engine intake manifold, temperature of air in an engine exhaust manifold, temperature of engine oil, temperature of transmission oil, and/or one or more other temperatures of components of the powertrain system 10. Additionally, or alternatively, set point trajectories may be determined for other conditions of the powertrain system 10, as desired. The controller 18 may be configured to update the set point trajectories of the conditions during operation of the cooling system 12 and/or engine 14 in view of received values for one or more variables sensed by the sensors 16 and/or other inputs.

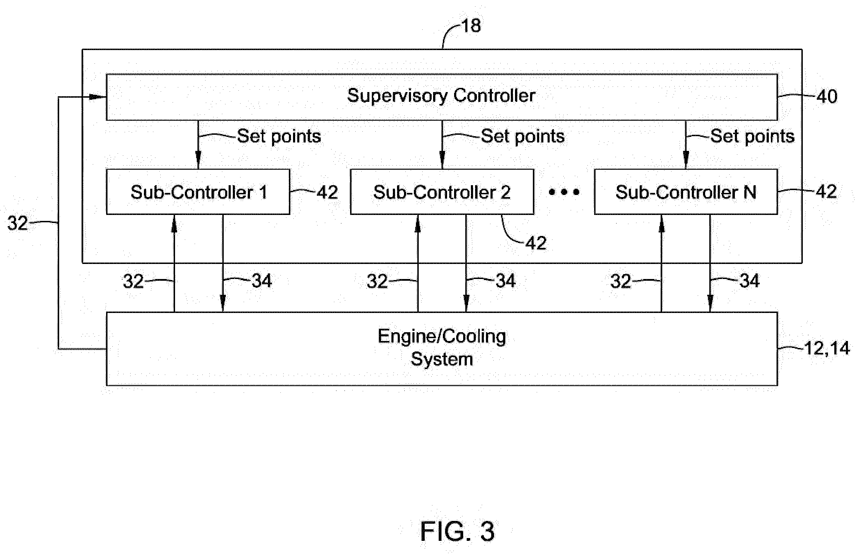

In some cases, the controller 18 (e.g., a multivariable controller based on Model Predictive Control (MPC)) may be and/or may include a supervisory controller 40 in communication with two or more powertrain component sub-controllers 42, as shown in Figure 3. The supervisory controller 40 may be configured to include the model (e.g., equation (1)) of the powertrain system 10 and the cost function (e.g., equation (2)) of the powertrain system 10 and determine set point trajectories for one or more condition of the cooling system 12 and the engine 14 (e.g., a set point trajectory for a temperature condition of the cooling system 12 and/or the engine 14). As shown in Figure 3, determined set point trajectories for conditions may be sent from the supervisory controller 40 to a sub-controller 42.

The sub-controllers 42 may be any type of controller. In one example, one or more sub-controllers 42 may be multivariable MPC based controllers configured to optimize output for one or more set point trajectories determined by the supervisory controller 40 and/or one or more sub-controllers 42 may be proportional-integral-derivative (PID) controllers configured to optimize output for a single set point trajectory determined by the supervisory controller 40.

In one example, the MPC based sub-controllers 42 may determine positions of actuators 20, 22 based on the following incoming sensor measurements 32 and the following cost function:

$$\min_{\{u_1,...u_{N_p}\}} J = \sum_{k=1}^{N_p} \left( \|y_k - y_k^{SP}\|_2^Q + \|u_k - u_k^{FF}\|_2^{R_R} + \|u_k - u_{k-1}\|_2^{R_\Delta} + \|\varepsilon\|_2^G \right)$$

$$(4)$$

subject to:

$$y_k = L(x_k, u_k, w_k)$$
$$u_{min} \le u_k \le u_{max}$$
$$y_{min} - \varepsilon \le y_k \le y_{max} + \varepsilon$$

$$(5)$$

Here, $y_k{}^{sp}$ may represent a variable for which a set point trajectory was determined by the supervisory controller 40 and $y_k$ may represent a value sensed by sensors 16 for the variable (e.g., condition) for which a set point trajectory is provided. As the MPC based sub-controller 42 may be a multivariable controller, the MPC may set values (e.g., positions) for one or more manipulated variables (e.g., positions of actuators 20, 22) to drive controlled variables (e.g., conditions) to associated set point trajectories (e.g., set point trajectories of conditions).

PID sub-controllers 42 may include a control loop feedback mechanism. In one example, the PID sub-controller 42 may calculate an error value as a difference between a measured variable and a set point trajectory for that variable, as determined by the supervisory controller 40. Over time, the PID sub-controller 42 may attempt to minimize the error by adjusting values (e.g., positions) of a manipulated variable (e.g., positions of an actuator 20, 22) to drive controlled variables (e.g., conditions) to associated set point trajectories (e.g., set point trajectories of conditions).

Once the positions of the actuators 20, 22 have been set by the sub-controllers 42 to meet the set point trajectories determined by the supervisory controller 40, the actuator positions may be sent to the cooling system 12 and/or the engine 14 and values of variables sensed by sensors 16 may be provided back to the supervisory controller 40 for use as inputs in the powertrain system cost function to determine set point trajectories of conditions and repeat the above steps.

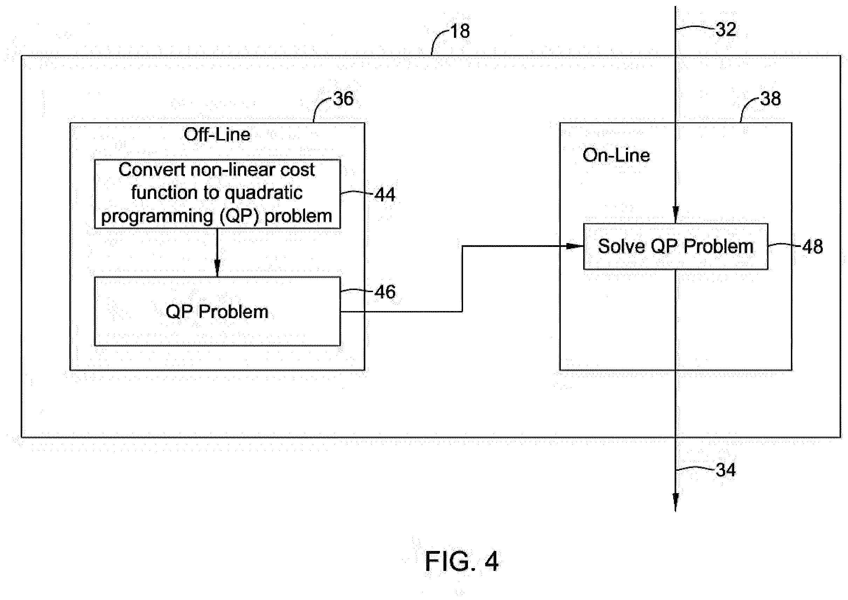

Figure 4 depicts an additional or alternative mechanism in which the non-linear cost function in equation (2) may be transformed into a quadratic optimization problem. The transformation may change the performance cost function into a tracking problem of a few set points, where weak directions (e.g., directions where there may be little change in the cost) are removed. The set point trajectories and/or actuator positions for conditions of a powertrain system may be determined in real time, while a powertrain system 10 is operating (e.g., during steady state and/or transient operation of the powertrain system 10). In Figure 4, the controller 18 (e.g., a multivariable controller) may include an off-line portion 36 and an on-line portion 38, where the on-line portion 38 may be configured to operate with inputs from components of the operating powertrain system 10, whereas the off-line portion 36 of the controller 18 may operate independent of components of the powertrain system 10 that are in operation.

As discussed herein, the controller 18 may be configured in one or more control components. In one example, off-line portion 36 of the controller 18 may be configured in a separate control component than a control component in which the on-line portion 38 may be configured. In such an instance, the off-line portion 36 may be configured on a personal computer, laptop computer, server, and so forth, which may be separate from the ECU/ECM of the powertrain system 10 in which the on-line portion 38 may be configured. Alternatively, or in addition, the controller 18 may be configured in one or more other control components.

The off-line portion 36 of the controller 18 may be configured in any computing device with processing power configured to convert 44 a non-linear cost function to a quadratic program (QP) problem. An illustrative non-linear model and cost function may be represented by:

$$\frac{dx_t}{dt} = f(x_t, u_t, w_t), \quad J = \sum j(x_k, u_k, w_k), \quad \texttt{subject to:} \quad A_i \begin{bmatrix} x_t \\ u_t \end{bmatrix} \leq b_i$$

$$(6)$$

To facilitate converting the non-linear cost function to a QP problem, the functions $f$ and $j$ of equation (6) may be approximated as follows:

$$\frac{dx_t}{dt} \approx Ax_t + B_u u_t + B_w w_t, \quad J \approx \sum \frac{1}{2} \begin{pmatrix} x_k \\ u_k \end{pmatrix}^T H(w_k) \begin{pmatrix} x_k \\ u_k \end{pmatrix} + f(w_k)^T \begin{pmatrix} x_k \\ u_k \end{pmatrix}$$

$$(7)$$

Then, equation (7) may be converted 44 to a QP tracking problem 46 (e.g., using Hessian eigenvectors) and tuned to the controller, which may result in:

$$J = \sum \|z(t+k) - r(t+k)\|_2^2 + R_\Delta \sum \|u(t+k) - u(t+k-1)\|_2^2$$

$$(8)$$

The on-line portion 38 of the controller 18 may be configured to solve 48 the QP problem 46, as in equation (8), subject to:

$$z_t = \sqrt{S}V^T \begin{bmatrix} x_t \\ u_t \end{bmatrix}$$

$$r_t = \sqrt{S^{-1}}V^T f(w_t)$$

$$x_{t+1} = Ax_t + B_u u_t + B_w w_t$$

$$F \begin{bmatrix} x(t+k) \\ u(t+k) \end{bmatrix} \leq b$$

$$(9)$$

which may represent a linear plant model and constraints. From solving for equation (8) in view of equation (9), the online portion 38 may identify set point trajectories for conditions (e.g., thermal conditions) of the powertrain system 10. Then, based, at least in part, on the identified set point trajectories and current operating conditions of the cooling system 12, the engine 14, and/or other components of the powertrain system 10 (e.g., inputs 32 from sensors 16 and/or other values for operating variables including, but not limited to, positions of actuators), the on-line portion 38 of the controller 18 may optimize the cost function in view of the identified set point trajectories to determine positions of actuators 20, 22 of the cooling system 12 and/or engine 14 (and/or of other components of the powertrain system 10). The determined positions of actuators 20, 22 (e.g., manipulated variables) may be configured to drive values of one or more conditions (e.g., a controlled variable) to an associated set point trajectory and output 34 to various actuators 20, 22 of the powertrain system 10.

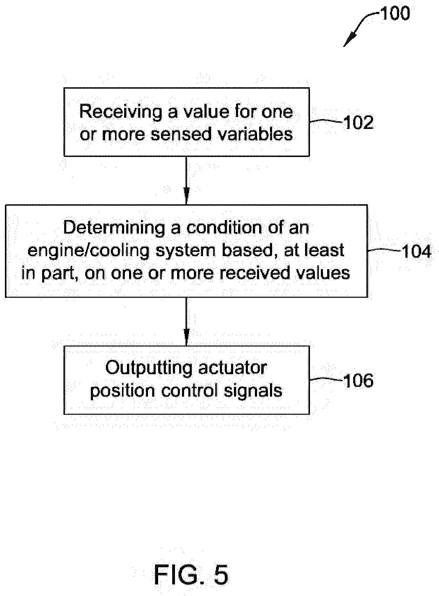

Figure 5 depicts an illustrative approach 100 of thermal management of a powertrain system in accordance with the powertrain system 10 disclosed herein. The approach 100 may include receiving 102 one or more values for one or more variables sensed in a component (e.g., cooling system 12, engine 14, or other component) of the powertrain system 10. Based, at least in part, on the received value(s) for one or more variables sensed in the component(s) of the powertrain system 10, a set point trajectory for a condition (e.g., a temperature, pressure, flow, or other condition) of one or more components of the powertrain system 10 may be determined 104. In one example, the set point trajectory for the condition of the one or more components of the powertrain system 10 may be determined based, at least in part, on a cost function for the operation of the powertrain system 10 and/or a component thereof. Once, the set point trajectory or trajectories are known, the controller 18 may determine optimal positions of actuators (e.g., actuators 20, 22 or other actuators) of the cooling system 12, engine 14, and/or other components of the powertrain system 10 based on received inputs during operation of the engine 14 and/or other components of the powertrain system 10. These positions of actuators may be outputted 106 as control signals configured to accordingly adjust positions of the actuators 20, 22. In some cases, the control signals may be configured to adjust actuator positions to drive a value of one or more conditions (e.g., a temperature, pressure, and/or flow) of the powertrain system 10 or component thereof to an associated set point trajectory. In some cases, the approach 100 may be performed in real time during operation of one or more components of the powertrain system 10 and implemented in a manner similar to that discussed with respect to Figure 3, Figure 4, or a combination of Figures 3 and 4.

The following is a recap of the above disclosure. A powertrain system may include an engine, a cooling system, a controller connected to the engine and the cooling system, and one or more sensors. The cooling system may be connected to the engine and may include one or more actuators. The sensor(s) may be in communication with the controller and may sense values of one or more variables of the engine and/or the cooling system. The controller may be configured to control positions of the actuators of the cooling system and receive values of variable sensed by the sensors during operation of the engine. The received values for a sensed variable may be indicative of one or more conditions of the engine and/or the cooling system. The controller may be configured to further adjust one or more positions of the actuators of the cooling system to drive a value of the one or more conditions to associated condition set point trajectories for the engine and/or cooling system.

The controller of the powertrain system may be configured to determine condition set point trajectories associated with the one or more conditions of the engine and/or the cooling system. In some cases, the controller may determine condition set point trajectories associated with the one or more conditions based, at least in part, on a cost function that optimizes a set of performance variables of the engine and/or cooling system.

Further, the controller of the powertrain system may be configured to maintain each of the condition set point trajectories within predetermined constraints.

Further, the controller of the powertrain system may be configured to maintain actuator positions within predetermined constraints when determining the condition set point trajectories associated with the one or more conditions.

Further, the controller of the powertrain system may be configured to use the cost function and sensor inputs to minimize one or more of fuel consumption of the engine and parasitic losses of the engine while maintaining one or more of the conditions and the positions of the actuators of the engine within respective constraints.

The controller of the powertrain system may be configured to update the condition set point trajectories during operation of the engine and/or cooling system in view of received values for one or more variables sensed by the one or more sensors during operation of the engine.

In the powertrain system, a condition of the one or more conditions may include a temperature condition, where the powertrain system may have a temperature condition set point trajectory for the temperature condition. The temperature condition set point trajectory may include one or more engine component temperature set point trajectories. Illustratively, the engine component temperature set point trajectories may incorporate one or more of an engine housing material temperature set point trajectory, an engine intake manifold air temperature set point trajectory, an engine exhaust manifold air temperature set point trajectory, an engine oil temperature set point trajectory, and a transmission oil temperature set point trajectory.

The controller of the powertrain system may incorporate a multivariable supervisory controller and two or more powertrain component controllers. The multivariable supervisory controller may be configured to determine one or more temperature condition set point trajectories. Each of the two or more powertrain component controllers may adjust positions of actuators associated with the powertrain component controller to drive a value of the temperature condition to the temperature condition set point trajectory.

The multivariable supervisory controller and the powertrain component controllers may receive values for one or more variables. The received values for one or more variables may be sensed by the one or more sensors during operation of the engine.

The controller of the powertrain system may incorporate a multivariable controller that includes an off-line portion configured to operate without input from an operating engine and an on-line portion configured to operate with input from an operating engine.

In the powertrain system, the off-line portion of the multivariable controller may be configured to convert a non-linear cost function into a quadratic programming problem.

The on-line portion of the multivariable controller may be configured to determine the engine and/or cooling system actuator positions. The actuator positions may be determined by solving, at least in part, a quadratic programming problem in view of current operating conditions of the engine and/or cooling system.

The on-line portion of the multivariable controller may be configured to set positions of engine and/or cooling system actuators. The positions of the engine and/or cooling system actuators may be set in view of condition set point trajectories and current operating conditions of the engine and/or cooling system.

The one or more conditions of the engine and/or cooling system may include one or more of a pressure condition, a flow condition, and a temperature condition of one or more of the engine and/or cooling system.

A powertrain thermal management system may incorporate a controller with memory, a processor in communication with the memory and an input/output (I/O) port. The I/O port may be in communication with one or more of the memory and the processor. The controller may be configured to receive, via the input/output port, values for one or more variables sensed by sensors monitoring an engine and/or cooling system connected to the engine. Based, at least in part, on the received values for the one or more variables, the controller may determine a set point trajectory for one or more engine component and/or cooling system temperatures. Via the input/output port, the controller may send control signals to adjust positions of engine actuators and/or cooling system actuators to drive values of the engine component temperatures to the determined set point trajectories based, at least in part, on the received values for one or more variables.

The engine component and/or cooling system temperatures of the powertrain thermal management system may include one or more of an engine housing material temperature; an engine intake manifold air temperature; an engine exhaust manifold air temperature; an engine oil temperature; and a transmission oil temperature.

The controller of the powertrain thermal management system may determine the set point trajectory for one or more engine component temperatures and/or cooling system component temperatures based, at least in part, on a powertrain cost function.

An approach of thermal management of a powertrain system may incorporate receiving a value for one or more variables sensed in an operating engine and determining a set point trajectory for a temperature condition of the engine based, at least in part, on the received value for one or more variables sensed in the operating engine. Further, the approach may incorporate outputting one or more control signals controlling positions of actuators of the engine and/or positions of actuators of a cooling system connected to the engine during operation of the engine. The control signals may be configured to adjust one or more positions of the actuators of the engine and/or of the cooling system to drive a value of the temperature condition to the determined set point trajectory for the temperature condition.

In the approach, the set point trajectory for a temperature condition of the engine may be based, at least in part, on a cost function for the operation of the engine.

In the approach, determining a set point trajectory for a temperature condition of the engine may incorporate determining a temperature set point trajectory for one or more engine components of the operating engine.

In the present specification, some of the matter may be of a hypothetical or prophetic nature although stated in another manner or tense.

**Claims**

1. A powertrain system comprising: an engine (14);

   a cooling system (12) connected to the engine and having one or more actuators (20);
   a multivariable controller (18) configured in more than one control component including an off-line portion (36) configured to operate without input from an operating engine and an online portion (38) configured to operate with input from an operating engine, the on-line portion (38) connected to the engine and the cooling system and the off-line portion being a separate control component than a control component of the on-line portion;
   one or more sensors (16) in communication with the controller and configured to sense values of one or more variables of the engine and/or the cooling system; and

   wherein:

   the controller is configured to control positions of the one or more actuators of the cooling system;
   the controller is configured to receive values for one or more variables sensed by the one or more sensors during operation of the engine, where at least one received value for a sensed variable is indicative of one or more conditions of the engine and/or the cooling system; and
   the on-line portion of the controller is configured to adjust one or more positions of the actuators of the cooling system to drive a value of the one or more conditions to associated condition set point trajectories for the engine and/or cooling system based on a quadratic programming problem determined with the off-line portion of the controller.

2. The system of claim 1, wherein the controller is configured to determine condition set point trajectories associated with the one or more conditions based, at least in part, on a cost function that optimizes a set of performance variables of the engine and/or cooling system.

3. The system of claim 2, wherein the controller is configured to maintain each of the condition set point trajectories within predetermined constraints.

4. The system of claim 2, wherein the controller is configured to maintain actuator positions within predetermined constraints when determining the condition set point trajectories associated with the one or more conditions.

5. The system of claim 2, wherein the controller is configured to use the cost function and sensor inputs to minimize one or more of fuel consumption of the engine and parasitic losses of the engine while maintaining one or more of the conditions and the positions of the actuators of the engine within respective constraints.

6. The system of claim 1, wherein the controller is configured to update the condition set point trajectories during operation of the engine and/or cooling system in view of received values for one or more variables sensed by the one or more sensors during operation of the engine.

7. The system of claim 1, wherein:

   a condition of the one or more conditions includes a temperature condition having a temperature condition set point trajectory, wherein the temperature condition set point trajectory comprises one or more engine component temperature set point trajectories; and
   the engine component temperature set point trajectories comprise one or more of:

      an engine housing material temperature set point trajectory;
      an engine intake manifold air temperature set point trajectory;
      an engine exhaust manifold air temperature set point trajectory;

an engine oil temperature set point trajectory; and
a transmission oil temperature set point trajectory.

8. The system of claim 1, wherein:

the controller comprises a multivariable supervisory controller and two or more powertrain component controllers;
the multivariable supervisory controller is configured to determine the temperature condition set point trajectory; and
each of the two or more powertrain component controllers are configured to adjust positions of actuators associated with the powertrain component controller to drive a value of the temperature condition to the temperature condition set point trajectory.

9. The system of claim 8, wherein the multivariable supervisory controller and the powertrain component controllers receive values for one or more variables sensed by the one or more sensors during operation of the engine.

10. The system of claim 1, wherein the off-line portion of the multivariable controller is configured to convert a non-linear cost function into the quadratic programming problem.

11. The system of claim 10, wherein the on-line portion of the multivariable controller is configured to determine the engine and/or cooling system actuator positions by solving, at least in part, the quadratic programming problem in view of current operating conditions of the engine and/or cooling system.

12. The system of claim 1, wherein the on-line portion of the multivariable controller is configured to set positions of engine and/or cooling system actuators in view of condition set point trajectories and current operating conditions of the engine and/or cooling system.

13. The system of claim 1, wherein the one or more conditions of the engine and/or cooling system include one or more of a pressure condition, a flow condition, and a temperature condition of one or more of the engine and/or cooling system.

14. A powertrain thermal management system comprising:
a multivariable controller (18) configured in more than one control component including an off-line portion (36) configured to operate without input from an operating engine (14) and an on-line portion (38) configured to operate with input from an operating engine, the on-line portion (38) connected to the engine and a cooling system and the offline portion being a separate control component than a control component of the on-line portion, the controller comprising:

a memory (24);
a processor (26) in communication with the memory; and
an input/output port (28) in communication with one or more of the memory and the processor; and wherein:

the controller is configured to receive, via the input/output port, values for one or more variables sensed by sensors monitoring an engine and/or cooling system connected to the engine;
the online portion of the controller is configured to determine a set point trajectory for one or more engine component and/or cooling system temperatures based, at least in part, on the received values for one or more variables and a quadratic programming problem determined with the off-line portion of the controller; and
send, via the input/output port, control signals to adjust positions of engine actuators and/or cooling system actuators to drive values of the engine component temperatures to the determined set point trajectories based, at least in part, on the received values for one or more variables.

15. The system of claim 14, wherein the engine component and/or cooling system temperatures include one or more of:

engine housing material temperature;
engine intake manifold air temperature;
engine exhaust manifold air temperature;
engine oil temperature; and
transmission oil temperature.

16. The system of claim 14, wherein the controller is configured to determine the set point trajectory for one or more engine component temperatures and/or cooling system component temperatures based, at least in part, on a powertrain cost function.

**Patentansprüche**

1. Antriebsstrangsystem, umfassend: einen Motor (14);

   ein Kühlsystem (12), das mit dem Motor verbunden ist und ein oder mehrere Betätigungselement (20) aufweist; eine multivariable Steuerung (18), die in mehr als einer Steuerkomponente konfiguriert ist und einen abgeschalteten Abschnitt (36), der dazu konfiguriert ist, ohne Eingabe von einem Betriebsmotor zu arbeiten, und einen eingeschalteten Abschnitt (38) enthält, der dazu konfiguriert ist, mit Eingabe von einem Betriebsmotor zu arbeiten, wobei der eingeschaltete Abschnitt (38) mit dem Motor und dem Kühlsystem verbunden ist und der abgeschaltete Abschnitt eine separate Steuerkomponente im Vergleich zu einer Steuerkomponente des eingeschalteten Abschnitts ist;
   einen oder mehrere Sensoren (16), die mit der Steuerung kommunizieren und dazu konfiguriert sind, Werte einer oder mehrerer Variablen des Motors und/oder des Kühlsystems zu erfassen; und wobei:

   die Steuerung dazu konfiguriert ist, die Positionen des einen oder der mehreren Betätigungselemente des Kühlsystems zu steuern;
   die Steuerung dazu konfiguriert ist, Werte für eine oder mehrere Variablen zu empfangen, die von dem einen oder den mehreren Sensoren während des Betriebs des Motors erfasst werden, wobei mindestens ein empfangener Wert für eine erfasste Variable einen oder mehrere Zustände des Motors und/oder des Kühlsystems anzeigt; und
   der eingeschaltete Abschnitt der Steuerung dazu konfiguriert ist, eine oder mehrere Positionen der Betätigungselemente des Kühlsystems anzupassen, um einen Wert des einen oder der mehreren Zustände zu verknüpften Zustandssollwertkurven für den Motor und/oder das Kühlsystem basierend auf einem quadratischen Programmierproblem, das mit dem abgeschalteten Abschnitt der Steuerung bestimmt wird, voranzutreiben.

2. System nach Anspruch 1, wobei die Steuerung dazu konfiguriert ist, Zustandssollwertkurven, die mit dem einen oder den mehreren Zuständen verknüpft sind, mindestens teilweise basierend auf einer Kostenfunktion zu bestimmen, die einen Satz von Leistungsvariablen des Motors und/oder des Kühlsystems optimiert.

3. System nach Anspruch 2, wobei die Steuerung dazu konfiguriert ist, jede der Zustandssollwertkurven innerhalb vorgegebener Einschränkungen zu halten.

4. System nach Anspruch 2, wobei die Steuerung dazu konfiguriert ist, Positionen der Betätigungselemente innerhalb vorgegebener Einschränkungen zu halten, wenn die Zustandssollwertkurven bestimmt werden, die mit dem einen oder den mehreren Zuständen verknüpft sind.

5. System nach Anspruch 2, wobei die Steuerung dazu konfiguriert ist, die Kostenfunktion und die Sensoreingaben zu verwenden, um den Kraftstoffverbrauch des Motors und/oder parasitäre Verluste des Motors zu minimieren und gleichzeitig eine/n oder mehrere der Zustände und Positionen der Betätigungselemente des Motors innerhalb der jeweiligen Beschränkungen zu halten.

6. System nach Anspruch 1, wobei die Steuerung dazu konfiguriert ist, die Zustandssollwertkurven während des Betriebs des Motors und/oder des Kühlsystems im Hinblick auf empfangene Werte für eine oder mehrere Variablen zu aktualisieren, die von dem einen oder den mehreren Sensoren während des Betriebs des Motors erfasst werden.

7. System nach Anspruch 1, wobei:

   ein Zustand des einen oder der mehreren Zustände einen Temperaturzustand mit einer Temperaturzustands-Sollwertkurve enthält, wobei die Temperaturzustands-Sollwertkurve eine oder mehrere Temperatur-Sollwertkurven der Motorkomponenten umfasst; und
   die Temperatur-Sollwertkurven der Motorkomponenten eines oder mehrere von Folgendem umfassen:

eine Temperatur-Sollwertkurve des Motorgehäusematerials;
eine Lufttemperatur-Sollwertkurve des Motoransaugkrümmers;
eine Lufttemperatur-Sollwertkurve des Motorabgaskrümmers;
eine Temperatur-Sollwertkurve des Motoröls; und
eine Temperatur-Sollwertkurve des Getriebeöls.

8. System nach Anspruch 1, wobei:

die Steuerung eine multivariable Überwachungssteuerung und zwei oder mehr Steuerungen für die Antriebsstrangkomponenten umfasst;
die multivariable Überwachungssteuerung dazu konfiguriert ist, dass er die Temperatur-Zustandssollwertkurven zu bestimmen; und
jede der zwei oder mehr Steuerungen für die Antriebsstrangkomponenten dazu konfiguriert ist, Positionen von Betätigungselementen, die mit der Steuerung für die Antriebsstrangkomponenten verknüpft sind, anzupassen, um einen Wert des Temperaturzustands zu den Temperatur-Zustandssollwertkurven voranzutreiben.

9. System nach Anspruch 8, wobei die multivariable Überwachungssteuerung und die Steuerungen für die Antriebsstrangkomponenten Werte für eine oder mehrere Variablen empfangen, die von dem einen oder den mehreren Sensoren während des Betriebs des Motors erfasst werden.

10. System nach Anspruch 1, wobei der abgeschaltete Abschnitt der multivariablen Steuerung dazu konfiguriert ist, eine nichtlineare Kostenfunktion in das quadratische Programmierproblem umzuwandeln.

11. System nach Anspruch 10, wobei der eingeschaltete Abschnitt der multivariablen Steuerung dazu konfiguriert ist, Positionen der Betätigungselemente des Motors und/oder des Kühlsystems zu bestimmen, indem sie mindestens teilweise das quadratische Programmierproblem im Hinblick auf aktuelle Betriebszustände des Motors und/oder des Kühlsystems löst.

12. System nach Anspruch 1, wobei der eingeschaltete Abschnitt der multivariablen Steuerung dazu konfiguriert ist, Positionen der Betätigungselemente des Motors und/oder des Kühlsystems im Hinblick auf Zustandssollwertkurven und aktuelle Betriebszustände des Motors und/oder des Kühlsystems einzustellen.

13. System nach Anspruch 1, wobei der eine oder die mehreren Zustände des Motors und/oder des Kühlsystems einen oder mehrere von einem Druckzustand, einem Strömungszustand und einem Temperaturzustand von einem oder mehreren des Motors und/oder des Kühlsystems enthalten.

14. Antriebsstrang-Wärmemanagementsystem, umfassend:
eine multivariable Steuerung (18), die in mehr als einer Steuerkomponente konfiguriert ist und einen abgeschalteten Abschnitt (36), der dazu konfiguriert ist, ohne Eingabe von einem Betriebsmotor zu arbeiten, und einen eingeschalteten Abschnitt (38) enthält, der dazu konfiguriert ist, mit Eingabe von einem Betriebsmotor zu arbeiten, wobei der eingeschaltete Abschnitt (38) mit dem Motor und einem Kühlsystem verbunden ist und der abgeschaltete Abschnitt eine separate Steuerkomponente im Vergleich zu einer Steuerkomponente des eingeschalteten Abschnitts ist, wobei die Steuerung Folgendes umfasst:

einen Speicher (24);
einen Prozessor (26), der mit dem Speicher in Verbindung steht; und
einen Eingabe-/Ausgabeanschluss (28), der mit einem oder mehreren von dem Speicher und dem Prozessor in Verbindung steht; und wobei:

die Steuerung dazu konfiguriert ist, über den Eingabe-/Ausgabeanschluss Werte für eine oder mehrere Variablen zu empfangen, die von Sensoren erfasst werden, die einen Motor und/oder ein Kühlsystem, das mit dem Motor verbunden ist, überwachen;
der eingeschaltete Abschnitt der Steuerung dazu konfiguriert ist, eine Sollwertkurve für eine oder mehrere Temperaturen der Motorkomponenten und/oder des Kühlsystems mindestens teilweise basierend auf den empfangenen Werten für eine oder mehrere Variablen und einem quadratischen Programmierproblem, das mit dem abgeschalteten Abschnitt der Steuerung bestimmt wird, zu bestimmen; und
über den Eingangs-/Ausgangsanschluss Steuersignale zu senden, um Positionen von Betätigungselementen des Motors und/oder von Betätigungselementen des Kühlsystems anzupassen, um Werte der Temperaturen der Motorkomponenten mindestens teilweise basierend auf den empfangenen Werten für eine oder mehrere Variablen zu den bestimmten Sollwertkurven voranzutreiben.

15. System nach Anspruch 14, wobei die Temperaturen der Motorkomponenten und/oder des Kühlsystems eines oder mehrere von Folgendem umfassen:

Temperatur des Motorgehäusematerials;
Lufttemperatur des Motoransaugkrümmers;
Lufttemperatur des Motorabgaskrümmers;
Temperatur des Motoröls; und
Temperatur des Getriebeöls.

16. System nach Anspruch 14, wobei die Steuerung dazu konfiguriert ist, die Sollwertkurve für eine oder mehrere Temperaturen der Motorkomponenten und/oder Temperaturen der Kühlsystemkomponenten mindestens teilweise basierend auf einer Antriebsstrangkostenfunktion zu bestimmen.

**Revendications**

1. Système de commande de groupe motopropulseur comprenant : un moteur (14) ;

un système de refroidissement (12) connecté au moteur et ayant un ou plusieurs actionneurs (20) ;
une commande multivariable (18) configurée en plus d'un composant de commande incluant une partie hors-ligne (36) configurée pour fonctionner sans entrée d'un moteur en marche et une partie en-ligne (38) configurée pour fonctionner avec une entrée d'un moteur en marche, la partie en-ligne (38) étant connectée au moteur et le système de refroidissement et la partie hors-ligne étant connectée au moteur et au système de refroidissement et la partie hors-ligne étant un composant de commande séparé qu'un composant de commande de la partie en-ligne ;
un ou plusieurs capteur(s) (16) en communication avec la commande et configurés pour détecter des valeurs d'une ou plusieurs variables du moteur et/ou du système de refroidissement ; et
dans lequel :

la commande est configurée pour commander des positions de l'un ou des actionneurs du système de refroidissement ;
la commande est configurée pour recevoir des valeurs pour une ou plusieurs variables détectée(s) par le(s) capteur(s) pendant la marche du moteur, où au moins une valeur reçue pour une variable détectée indique un ou plusieurs état(s) du moteur et/ou du système de refroidissement ; et
la partie en-ligne de la commande est configurée pour ajuster une ou plusieurs positions des actionneurs du système de refroidissement pour entraîner une valeur du/des état(s) à des trajectoires de point de consigne d'état associées pour le moteur et/ou le système de refroidissement en se basant sur un problème de programmation quadratique déterminé avec la partie hors-ligne de la commande.

2. Système selon la revendication 1, dans lequel la commande est configurée pour déterminer des trajectoires de point de consigne d'état associées à l'état ou aux états en se basant, au moins en partie, sur une fonction de coût qui optimise un jeu de variables de performance du moteur et/ou du système de refroidissement.

3. Système selon la revendication 2, dans lequel la commande est configurée pour maintenir chacune des trajectoires de point de consigne d'état dans des contraintes prédéterminées.

4. Système selon la revendication 2, dans lequel la commande est configurée pour maintenir des positions d'actionneur dans des contraintes prédéterminées lors de la détermination des trajectoires de point de consigne d'état associées à l'état ou aux états.

5. Système selon la revendication 2, dans lequel la commande est configurée pour utiliser la fonction de coût et des entrées de capteur pour réduire au minimum une ou des consommation(s) de carburant du moteur et des pertes parasitiques du moteur tout en maintenant un(e) ou plusieurs des états et des positions des actionneurs du moteur dans des contraintes respectives.

**6.** Système selon la revendication 1, dans lequel dans lequel la commande est configurée pour mettre à jour les trajectoires de point de consigne d'état pendant la marche du moteur et/ou du système de refroidissement au vu de valeurs reçues pour une ou plusieurs variable(s) détectée(s) par l'un ou les capteur(s) pendant la marche du moteur.

**7.** Système selon la revendication 1, dans lequel :

un état de l'un ou des état(s) inclut un état de température ayant une trajectoire de point de consigne d'état de température, dans lequel la trajectoire de point de consigne d'état de température comprend une ou plusieurs trajectoires de point de consigne d'état de température de composant moteur ; et
les trajectoires de point de consigne d'état de température de composant moteur comprennent un ou plusieurs de :

une trajectoire de point de consigne de température de matériau de carter de moteur ;
une trajectoire de point de consigne de température d'air de collecteur d'alimentation de moteur ;
une trajectoire de point de consigne de température de collecteur d'échappement de moteur une trajectoire de point de consigne de température d'huile de moteur ; et
une trajectoire de point de consigne de température d'huile de transmission.

**8.** Système selon la revendication 1, dans lequel :

la commande comprend une commande de supervision multivariable et deux ou plusieurs commandes de composant de groupe motopropulseur ;
la commande de supervision multivariable est configurée pour déterminer la trajectoire de point de consigne d'état de température ; et
chacune des deux ou plusieurs commandes de composant de groupe motopropulseur sont configurées pour ajuster des positions des actionneurs associés à la commande de composant de groupe motopropulseur est configurée pour entraîner une valeur de l'état de température à la trajectoire de point de consigne d'état de température.

**9.** Système selon la revendication 8, dans lequel la commande de supervision multivariable et les commandes de composant de motopropulseur reçoivent des valeurs pour une ou plusieurs variable(s) détectée(s) par le(s) capteur(s) pendant la marche du moteur.

**10.** Système selon la revendication 1, dans lequel la partie hors-ligne de la commande multivariable est configurée pour convertir une fonction de coût non-linéaire en le problème de programmation quadratique.

**11.** Système selon la revendication 10, dans lequel la partie en-ligne de la commande multivariable est configurée pour déterminer les positions d'actionneur du moteur et/ou du système de refroidissement en résolvant, au moins en partie, le problème de programmation quadratique au vu d'états de marche en cours du moteur et/ou du système de refroidissement.

**12.** Système selon la revendication 1, dans lequel la partie en-ligne de la commande multivariable est configurée pour régler des positions d'actionneurs du moteur et/ou du système de refroidissement au vu de trajectoires de point de consigne d'état et d'états de marche en cours du moteur et/ou du système de refroidissement.

**13.** Système selon la revendication 1, dans lequel le (s) état(s) du moteur et/ou du système de refroidissement incluent un ou plusieurs d'un état de pression, d'un état d'écoulement et d'un état de température d'un ou plusieurs du moteur et/ou du système de refroidissement.

**14.** Système de gestion thermique de groupe motopropulseur comprenant :
une commande multivariable (18) configurée en plus d'un composant de commande incluant une partie hors-ligne (36) configurée pour fonctionner sans entrée d'un moteur en marche (14) et une partie en-ligne (38) configurée pour fonctionner avec une entrée d'un moteur en marche, la partie en-ligne (38) étant connectée au moteur et à un système de refroidissement et la partie hors-ligne étant connectée au moteur et au système de refroidissement et la partie hors-ligne étant un composant de commande séparé qu'un composant de commande de la partie en-ligne, la commande comprenant :

une mémoire (24) ;

un processeur (26) en communication avec la mémoire ; et

un port d'entrée/de sortie (28) en communication avec un ou plusieurs de la mémoire et du processeur ;

et dans lequel :

la commande est configurée pour recevoir, par le biais du port d'entrée/de sortie, des valeurs pour une ou plusieurs variable(s) détectée(s) par des capteurs surveillant un moteur et/ou un système de refroidissement connecté au moteur ;

la partie en-ligne de la commande est configurée pour déterminer une trajectoire de point de consigne pour une ou plusieurs température(s) de composant moteur et/ou de système de refroidissement en se basant, au moins en partie, sur les valeurs reçues pour une ou plusieurs variable(s) et un problème de programmation quadratique déterminé avec la partie hors-ligne de la commande ; et

envoyer, par le biais du port d'entrée/de sortie, des signaux de commande pour ajuster des positions d'actionneurs du moteur et d'actionneurs du système de refroidissement pour entraîner des valeurs des températures de composant moteur aux trajectoires de point de consigne déterminées en se basant, au moins en partie, sur les valeurs reçues pour une ou plusieurs variable(s).

15. Système selon la revendication 14, dans lequel les températures de composant moteur et/ou de système de refroidissement incluent un ou plusieurs de :

température de matériau de carter de moteur ;

température d'air de collecteur d'alimentation de moteur ;

température d'air de collecteur d'échappement de moteur ;

température d'huile de moteur ; et

température d'huile de transmission.

16. Système selon la revendication 14, dans lequel la commande est configurée pour déterminer la trajectoire de point de consigne pour une ou plusieurs température(s) de composant moteur et/ou température(s) de composant de système de refroidissement en se basant, au moins en partie, sur une fonction de coût du groupe motopropulseur.

FIG. 1

FIG. 2

FIG. 3

EP 3 239 486 B1

Off-Line

Convert non-linear cost function to quadratic programming (QP) problem —44

QP Problem —46

On-Line

Solve QP Problem —48

18

36

38

32

34

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007261648 A1